# EUROPEAN PATENT SPECIFICATION

(11) **EP 3 779 260 B1**
(45) Date of publication and mention of the grant of the patent: **26.06.2024**
(21) Application number: 19776317.0
(22) Date of filing: 25.02.2019
(51) Int. Cl.: F16L 59/065, B32B 7/027, B32B 15/20

(54) **EXTERNAL PACKAGING MATERIAL FOR VACUUM HEAT INSULATION MATERIAL, VACUUM HEAT INSULATION MATERIAL, AND ARTICLE WITH VACUUM HEAT INSULATION MATERIAL**
AUSSENVERPACKUNGSMATERIAL FÜR VAKUUMWÄRMEDÄMMSTOFFE, VAKUUMWÄRMEDÄMMSTOFF UND ARTIKEL MIT VAKUUMWÄRMEDÄMMSTOFF
MATÉRIAU DE CONDITIONNEMENT EXTERNE POUR MATÉRIAU D'ISOLATION THERMIQUE SOUS VIDE, MATÉRIAU D'ISOLATION THERMIQUE SOUS VIDE ET ARTICLE POURVU DUDIT MATÉRIAU D'ISOLATION THERMIQUE SOUS VIDE

(30) Priority: 29.03.2018 JP 2018065349
(43) Date of publication of application: 17.02.2021
(73) Proprietor: Dai Nippon Printing Co., Ltd., Shinjuku-ku, Tokyo 162-8001 (JP)
(72) Inventor: MUNEDA, Taku, Tokyo 162-8001 (JP); IMAI, Masahiro, Tokyo 162-8001 (JP); MIZOSHIRI, Makoto, Tokyo 162-8001 (JP)
(74) Representative: Beck Greener LLP
(86) International application number: PCT/JP2019/007001
(87) International publication number: WO 2019/187871

(56) References cited:
- WO-A1-2016/159140
- JP-A- 2001 323 210
- JP-A- 2005 144 719
- JP-A- 2005 144 719
- JP-A- 2007 153 957
- JP-A- 2011 226 644
- JP-A- 2011 226 644

## Description

### Technical Field

The present disclosure relates to anouterpackingmaterial for vacuum insulation material used for forming a vacuum insulation material.

### Background Art

In recent years, vacuum insulation materials have been used for the purpose of energy conservation of articles. A vacuum insulation material is a material in which a core is arranged inside the bag body of an outer packing material, and inside the bag body is kept in a vacuum state of which pressure is lower than the atmospheric pressure; thus, heat convection inside is suppressed to exhibit excellent thermal insulation performance. Incidentally, the outer packing material used for the vacuum insulation material is referred to as an outer packing material for vacuum insulation material, or simply an outer packing material while explained.

Outer packing materials for vacuum insulation material require properties such as gas barrier properties for preventing gas such as oxygen and water vapor from permeating, and thermal weldability for enclosing and sealing a core material by thermally welding to seal the periphery of a pair of facing outer packing materials to form a bag body, in order to keep the vacuum state inside the vacuum insulation material for a long period of time. In order to satisfy these properties, in the outer packing material for vacuum insulation material, a layered body including a gas barrier film and a thermally weldable film as constituting members is generally used (such as in Patent Documents 1 to 5).

As the gas barrier film, for example, a constitution of a base material such as a plastic film including an inorganic thin film such as a metal film or a metal oxide film on its surface has been known. Among gas barrier films, a gas barrier film including a metal aluminum film as the inorganic thin film is capable of providing high water vapor barrier properties with relatively low cost.

### Citation List

### Patent Documents

Patent Document 1: Japanese Patent Application Laid-Open (JP-A) No. 2005-351405
Patent Document 2: JP-A No. 2008-023932
Patent Document 3: JP-A No. 2004-130654
Patent Document 4: JP-A No. 2015-075182
Patent Document 5: Japanese Patent (JP-B) No. 6149997 JP 2011 226644 discloses a laminated gas barrier composite film including a SiOx thin film layer, a primer layer, plastic films and an adhesive layer. JP 2005 144719 discloses vacuum heat insulation material comprising a core material covered by a covering material including a polyvinyl alcohol resin layer and a layer of reaction product of a metal oxide and a phosphorus compound.

### Summary

### Technical Problem

When the outer packing material for vacuum insulation material including the gas barrier film with the metal aluminum film as a constituent, is exposed to an environment having high temperature and high humidity for a long period of time, change of properties in the metal aluminum film occurs and as a result, the water vapor barrier properties of the outer packing material for vacuum insulation material overall may be deteriorated in short time in some cases.

A main object of the present disclosure is to provide an outer packing material for vacuum insulation material including the gas barrier film with the metal aluminum film, with which degrade in water vapor barrier properties can be inhibited even when exposed to the environment having high temperature and high humidity for a long period of time, as well as to provide a vacuum insulation material using the outer packing material, and an article provided with the vacuum insulation material.

### Solution to Problem

The present disclosure provides an outer packing material for vacuum insulation material comprising a gas barrier film including a metal aluminum film, and an adhesive layer disposed directly on the metal aluminum film; wherein the adhesive layer includes an adhesive agent component and a silicon-containing compound in which at least one of a hydrolysable group and a hydroxyl group directly bonds to a silicon atom; and the atomic ratio of the silicon in the adhesive layer is 1.5 at% or more and 7.0 at% or less.

Incidentally, in explanations below, "the atomic ratio of the silicon atom" may be referred to as "the silicon atomic ratio (in the adhesive layer) " while explained in some cases. Also, "the atomic ratio of the organic silicon atom" in the description may be referred to as "the organic silicon atomic ratio (in the adhesive layer) " while explained in some cases.

The present disclosure also provides a vacuum insulation material comprising a core material, and an outer packing material enclosing the core material; wherein, the outer packing material comprises a gas barrier film including a metal aluminum film, and an adhesive layer directly disposed on the metal aluminum film; the adhesive layer includes an adhesive agent component, and a silicon-containing compound in which at least one of a hydrolysable group and a hydroxyl group directly bonds to a silicon atom; and the atomic ratio of the silicon atom in the adhesive layer is 1.5 at% or more and 7.0 at% or less.

The present disclosure also provides an article with vacuum insulation material comprising an article including a thermal insulation region, and a vacuum insulation material; wherein, the vacuum insulation material comprises a core material, and an outer packing material enclosing the core material; the outer packing material comprises a gas barrier film including a metal aluminum film, and an adhesive layer directly disposed on the metal aluminum film; the adhesive layer includes an adhesive agent component, and a silicon-containing compound in which at least one of a hydrolysable group or a hydroxyl group directly bonds to a silicon atom; and the atomic ratio of the silicon atom in the adhesive layer is 1.5 at% or more and 7.0 at% or less.

### Advantageous Effects

According to the outer packing material for vacuum insulation material of the present disclosure, the adhesive layer that includes a silicon-containing compound in which at least one of a hydrolysable group and a hydroxyl group directly bonds to a silicon atom wherein the silicon atomic ratio is in the specified range, is disposed directly on the metal aluminum film of the gas barrier film including the metal aluminum film, and thus degrade in water vapor barrier properties can be inhibited even when exposed to an environment having high temperature and high humidity for a long period of time.

### Brief Description of Drawings

FIG. 1 is a schematic cross-sectional view illustrating an example of the outer packing material for vacuum insulation material of the present disclosure.
FIGS. 2A and 2B are a schematic perspective view and a cross-sectional view respectively illustrating an example of the vacuum insulation material of the present disclosure.

### Description of Embodiments

The present disclosure includes an outer packing material for vacuum insulation material, a vacuum insulation material, and an article provided with vacuum insulation material in embodiments. The embodiments of the present disclosure are hereinafter explained with reference to, for example, drawings. However, the present disclosure is enforceable in a variety of different forms, and thus should not be taken as is limited to the contents described in the embodiment exemplified as below. Also, the drawings may show the features of the invention such as width, thickness, and shape of each part schematically in order to explain the invention more clearly in some cases comparing to the actual form; however, it is merely an example, and thus does not limit the interpretation of the present disclosure. Also, in the specification and each drawing, for the factor same as that described in the figure already explained, the same reference sign is indicated and the explanation thereof may be omitted. In addition, for the convenience of explanation, explanation may be made using the terms upward or downward in some cases, but the direction of up and down may be reversed.

Also, in the present descriptions, when some structure in some member or some region and the like is described to be "on (or below) " the other structure in other member or the other region and the like, unless otherwise stated, it is not just the case of being directly on (or directly below) the other structure, but the case of being upward (or downward) the other structure is also included; it means it also includes the case an additional structural element is included in between the upward (or downward) the other structure.

### I. Outer packing material for vacuum insulation material

The outer packing material for vacuum insulation material of the present disclosure (may be hereinafter referred to as the outer packing material of the present disclosure in some cases) comprises a gas barrier film including a metal aluminum film, and an adhesive layer disposed directly on the metal aluminum film, wherein the adhesive layer includes an adhesive agent component and a silicon-containing compound in which at least one of a hydrolysable group and a hydroxyl group directly bonds to a silicon atom, and the atomic ratio of the silicon atom in the adhesive layer is in a specified range.

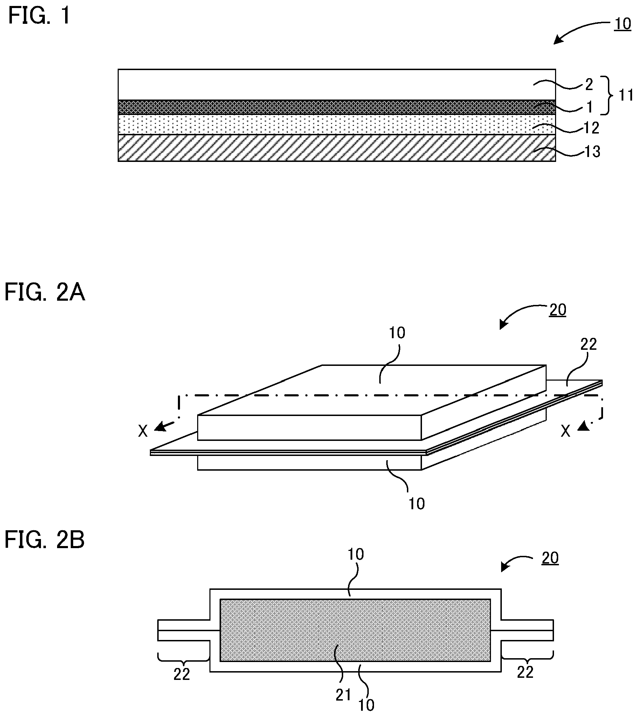

FIG. 1 is a schematic cross-sectional view illustrating an example of the outer packing material of the present disclosure . Outer packing material for vacuum insulation material 10 illustrated in FIG. 1 comprises gas barrier film 11 including metal aluminum film 1 and base material 2 disposed on one surface of the metal aluminum film 1, and adhesive layer 12 disposed directly on the other surface of the metal aluminum film 1. Incidentally, in FIG. 1, on the surface of the adhesive layer 12, which is the opposite side surface to the surface that contacts the metal aluminum film 1, thermally weldable film 13 is disposed. The adhesive layer 12 includes an adhesive agent component and a silicon-containing compound in which at least one of a hydrolysable group and a hydroxyl group directly bonds to a silicon atom. Also, in the adhesive layer 12, the atomic ratio of the silicon atom is in a specified range.

In the outer packing material of the present disclosure, the adhesive layer "disposed directly on the metal aluminum film" means that, in the thickness (layering) direction of the outer packing material, one surface of the adhesive layer is disposed so as to directly contact one surface of the metal aluminum film, and no other layers are interposed between the metal aluminum film and the adhesive layer.

It has been known that the metal aluminum film forms an oxidized film on its surface when it is exposed to air and reacts with oxygen in the air, then the oxidized film reacts with water molecules in the air which brings its surface to be covered with a hydroxyl group. For this reason, in the outer packing material for vacuum insulation material that comprises the gas barrier film including the metal aluminum film as a constituent, a hydroxyl group is usually present on the surface of the metal aluminum film. Here, the hydroxyl group is a hydrophilic group and thus, when the outer packing material for vacuum insulation material is exposed to an environment having high humidity for a long period of time, the hydroxyl group present on the surface of the metal aluminum film absorbs water molecules in the air permeated the outer packing material to form hydrogen bonds, and the surface of the metal aluminum film is covered with a number of water molecules; as a result, property change to an aluminum compound further proceed to inside the film. Then, along with the property change of the metal aluminum film, degrade in water vapor barrier properties proceeds, which results in degrade in water vapor barrier properties of the outer packing material for vacuum insulation material overall. The reason why the property change of the metal aluminum film causes the degrade in water vapor barrier properties is unclear; however, it is presumably because the distorted property change from the metal aluminum film to an aluminum compound proceeds in the film overall to produce the film state in which the aluminum compound and the metal aluminum are mixed, and a minute path is formed in the interface between the aluminum compound and the metal aluminum.

Also, when it is an environment having higher temperature in addition to high humidity, the water molecules in the air easily permeate the outer packing material, and thus the metal aluminum film easily contacts the water molecules to promote the progress of the property change of the metal aluminum film. Accordingly, compared to the case of being exposed to an environment having a normal temperature, degrade in water vapor barrier properties occurs in the metal aluminum film and the outer packing material for vacuum insulation material overall, in a short time.

In this manner, the outer packing material comprising the gas barrier film including the metal aluminum film as a constituent may have difficulty achieving water vapor barrier properties for a long period of time in an environment having high temperature and high humidity in some cases. Also, when a vacuum insulation material using such an outer packing material for vacuum insulation material is used in an environment having high temperature and high humidity, the vacuum degree inside rapidly drops, and thus it may be difficult to achieve water vapor barrier properties for a long period of time in some cases .

In contrary, in the outer packing material of the present disclosure, the adhesive layer that includes a silicon-containing compound, in which at least one of a hydrolysable group and a hydroxyl group directly bonds to a silicon atom, and the silicon atomic ratio is in the specified range, is directly disposed so as to contact the metal aluminum film of the gas barrier film including the metal aluminum film; thus, degrade in water vapor barrier properties can be inhibited even when the outer packing material is exposed to an environment having high temperature and high humidity for a long period of time. The reason therefor is presumably as follows. That is, a hydrolysable group and a hydroxyl group included in the silicon-containing compound in the adhesive layer becomes a silanol group directly or due to a hydrolysis reaction with water molecules. The silanol group forms a hydrogen bond with a hydroxyl group that is present in the adhesive layer side surface of the metal aluminum film, or through a dehydration condensation reaction with the hydroxyl group, a covalent bond can be formed. Thereby, the hydroxyl group present on the adhesive layer side surface of the metal aluminum film is blocked to inhibit absorption of water molecules; thus, the property change of the metal aluminum film and degrade in water vapor barrier properties therewith can be inhibited. In addition, the silicon atomic ratio in the adhesive layer is in the specified range, and thus enough amount of the silicon-containing compound to form a desired bond with the hydroxyl group present on the adhesive layer side surface of the metal aluminum film may be present in the adhesive layer. For this reason, the hydroxyl group present on the adhesive layer side surface of the metal aluminum film can be sufficiently blocked. Furthermore, when the silicon-containing compound bonded to the metal aluminum film contains a hydrophobic functional group, the hydrophobicity of the surface of the metal aluminum film increases to reduce the percentage of the presence of water molecules in the film surface. From the reasons above, the above described effects can be sufficiently achieved.

When the outer packing material of the present disclosure is exposed to an environment having high temperature and high humidity for a long period of time, between the adhesive layer and the metal aluminum film, a hydrogen bond or a Si-O-Al bond (covalent bond) is presumably formed between a hydroxyl group that bonds to a silicon atom in the silicon-containing compound, and a hydroxyl group present on the surface of the metal aluminum film. This presumption is, for example, based on the fact that, when a silicon-containing compound coats the surface of the metal aluminum film and then is removed by an acetone ultrasonic washing to analyze the ratio of silicon atoms remained in the surface of the metal aluminum film by an X-ray photo spectroscopy (XPS) after the washing, it has been indirectly confirmed that the metal aluminum film and the silicon-containing compound are bonded. Incidentally, for example, when the surface of a polyethylene terephthalate (PET) film is coated with the silicon-containing compound, desired bond would not be formed between the PET film and the coating film of the silicon-containing compound; thus, the remaining of the silicon atom would not be confirmed on the surface of the PET film after the acetone ultrasonic washing even when the same analysis is conducted thereto.

Hereinafter, the constitution and properties of the outer packing material in the present disclosure are explained in details.

### A. Adhesive layer

The adhesive layer in the outer packing material of the present disclosure is disposed directly on the metal aluminum film of the gas barrier film including the metal aluminum film, and includes an adhesive agent component and a silicon-containing compound in which at least one of a hydrolysable group and a hydroxyl group directly bonds to a silicon atom.

In the adhesive layer in the outer packing material of the present disclosure, the atomic ratio of the silicon atom (silicon atomic ratio in the adhesive layer) is in the specified range . The silicon atomic ratio in the adhesive layer here refers to an atomic ratio of silicon atoms when the whole number of carbon atoms, oxygen atoms, nitrogen atoms, and silicon atoms (inorganic silicon atoms and organic silicon atoms) in the surface of the adhesive layer measured by an X-ray photoelectron spectroscopy (XPS) is regarded as 100 at%. Also, as described later, when the silicon-containing compound is an organic silicon compound, the atomic ratio of the organic silicon atom (organic silicon atomic ratio in the adhesive layer) refers to the atomic ratio of the organic silicon atom when the whole number of carbon atoms, oxygen atoms, nitrogen atoms, and organic silicon atoms in the surface of the adhesive layer measured by an X-ray photoelectron spectroscopy (XPS) is regarded as 100 at%.

The silicon atomic ratio in the adhesive layer is 7.0 at% or less. When the silicon atomic ratio is 7.0 at% or less, the adhesive layer may achieve sufficient adhesive force while the absorption of water molecules to the metal aluminum film and the property change can be sufficiently inhibited. Above all, the silicon atomic ratio in the adhesive layer is preferably 5.0 at% or less, more preferably 4.5 at% or less, and particularly preferably 4.0 at% or less. When the silicon atomic ratio is 5.0 at% or less, the amount of gas such as alcohol gas generated by the reaction of the hydrolysable group included in the silicon-containing compound with the hydroxyl group in the metal aluminum film can be reduced, and thus higher thermal insulation performance can be maintained. Also, the silicon atomic ratio in the adhesive layer is 1.5 at% or more, preferably 2.0 at% or more, and more preferably 2.5 at% or more.

Accordingly, the silicon atomic ratio in the adhesive layer being in the specified range specifically means that the atomic ratio of the silicon atom is 1.5 at% or more and 7.0 at% or less, preferably 1.5 at% or more and 5.0 at% or less, and more preferably 2.0 at% or more and 5.0 at% or less. The reason therefor is that when the silicon atomic ratio in the adhesive layer is in the above range, absorption of water molecules to the metal aluminum film and the property change can be sufficiently inhibited, and also, the adhesive layer can achieve sufficient adhesive force.

As described later, when the silicon-containing compound is an organic silicon compound, the organic silicon atomic ratio in the adhesive layer may be determined within the above described range of the silicon atomic ratio. In other words, when the silicon-containing compound is an organic silicon compound, in the adhesive layer, the atomic ratio of the organic silicon atom is preferably 1.5 at% or more and 7.0 at% or less, more preferably 1.5 at% or more and 5.0 at% or less, and particularly preferably 2.0 at% or more and 5.0 at% or less. The reason therefor is the same as the reason for the case where the silicon atomic ratio in the adhesive layer is in the specified range; thus, the description herein is omitted.

Incidentally, when the organic silicon atomic ratio in the adhesive layer is exceedingly over the above described range, the condensation reaction of the organic silicon compounds proceeds since high concentration of the organic silicon compound is present in the adhesive layer, and the proportion of the condensate (siloxane oligomer) of the organic silicon compound occupied in the adhesive layer increases. Accordingly, the adhesive strength may be decreased to easily cause peel-off between the adhesive layer and the metal aluminum film in some cases.

The silicon atomic ratio or the organic silicon atomic ratio in the adhesive layer can be obtained by conducting a composition analysis of the adhesive layer surface by an X-ray photoelectron spectroscopy (XPS) . In more specific, it may be obtained by the following steps. First, in the outer packing material for vacuum insulation material, the adhesive layer is exposed by peeling off between the adhesive layer and the metal aluminum film contacting the adhesive layer, an X-ray is irradiated to the adhesive layer from the exposed surface to the thickness direction using an X-ray photoelectron spectroscopy meter in below conditions to measure the X-ray photoelectron spectrum. As the X-ray photoelectron spectroscopy meter, for example, Theta-Probe from Thermo Fisher Scientific may be used. When the silicon atomic ratio in the adhesive layer is to be measured, C, O, N, inorganic Si and organic Si are determined as the analysis target elements, and from the obtained spectrum, a background determined by Shirley method is subtracted, and thereby the atomic ratio (at%) of the silicon atom when the whole number of carbon atoms, oxygen atoms, nitrogen atoms, and silicon atoms are regarded as 100 at% can be obtained from the peak area using a relative sensitivity coefficient method. Also, when the organic silicon atomic ratio in the adhesive layer is to bemeasured, C, O, N, organic Si are determined as the analysis target elements, and from the obtained spectrum, a background determined by Shirley method is subtracted, and thereby the atomic ratio (at%) of the silicon atom when the whole number of carbon atoms, oxygen atoms, nitrogen atoms, and organic silicon atoms are regarded as 100 at% can be obtained from the peak area using a relative sensitivity coefficient method. Incidentally, in C1s spectrum, electrification correction is conducted so that the peak belonging to a C-C bond is in a range of 284.6 eV to 285.0 eV. Also, regarding Si2p peak, a peak that appears in a range of 101.5 eV to 102.5 eV in the spectrum is regarded as the peak derived from the organic Si, and a peak that appears in a range of 103.0 eV to 103.8 eV is regarded as the peak derived from the inorganic Si.

### <Measurement conditions>

Incident X-ray; Monochromated Al-Kα ray (single colored x-ray, Hν = 1486.6 eV
X-ray irradiation region (measurement area); 400 µmφ;
X-ray output; 100 W (15 kV·6.7 mA)
Photoelectron take-in angle; 53° (sample normal line is regarded as 0°)
Electrification neutralizing conditions; electron neutralizing gun (+ 6 V, 0.05 mA), low acceleration Ar⁺ ion irradiation
Measured peaks; Al2p, Si2p, C1s, N1s, O1s, F1s

Hereinafter, the composition of the adhesive layer is explained.

### 1. Silicon-containing compound

In the silicon-containing compound included in the adhesive layer, at least one of a hydrolysable group and a hydroxyl group directly bonds to a silicon atom.

Examples of the silicon-containing compound may include an inorganic silicon compound, an organic silicon compound, and the mixture of these.

Here, "organic silicon compound" signifies an organic compound including a silicon (Si) atom as a constituting atom. The organic silicon compound includes at least one direct chemical bond of a silicon atom and a carbon atom, and the silicon atom chemically bonded to a silicon atom is referred to as the organic silicon atom. In contrast, an inorganic compound including a silicon (Si) atom as a constituting atom is referred to as "inorganic silicon compound", which is distinguished from the organic silicon compound. The silicon atom in the inorganic silicon atom is referred to as the inorganic silicon atom. The bonding energy of the inorganic silicon atom is different from that of the organic silicon atom, and thus they appear separately in the Si2p spectrum of an analysis using X-ray photoelectron spectroscopy (XPS) method. In a peak separation analysis, a peak that appears in high bonding energy side can be determined as a peak derived from the Si (inorganic Si) of the inorganic silicon atom, and a peak that appears in low bonding energy side can be determined as a peak derived from Si (organic Si) of the organic silicon atom.

That is, the organic silicon compound in the present disclosure refers to a compound in which at least one of a hydrolysable group and a hydroxyl group directly bonds to an organic silicon atom. Also, the inorganic silicon compound in the present disclosure refers to a compound in which at least one of a hydrolysable group and a hydroxyl group directly bonds to an inorganic silicon atom.

In the disclosure, among them, the silicon-containing compound is preferably the organic silicon compound. Many of the organic silicon compound includes a hydrophilic organic functional group. When such an organic silicon compound forms a bond with the metal aluminum film, the hydrophilicity of the surface of the metal aluminum film can be improved. Thereby, the percentage of the presence of water molecules in the surface of the meatal aluminum film reduces not to easily cause the absorption reaction and the property change.

Examples of the organic silicon compound may include a monomer represented by the below formula (1):

Rₙ - SiX₄₋ₙ ... (1)

In the formula (1), n is an integer of 1 to 3, X is a hydrolysable group or a hydroxyl group, and R is an organic functional group or a hydrocarbon group including an organic functional group.

In the formula (1), n is an integer of 1 to 3, but it is preferably n = 1 among them. When n in the formula (1) is the above described integer, which means when three groups of a hydrolysable group or a hydroxyl group are included, reactivity with the hydroxyl group in the surface of the metal aluminum film is rich, and thus the effect of inhibiting the property change of the metal aluminum film and the effect of inhibiting degrade in gas barrier properties can be further achieved.

The "X" in the formula (1) represents a hydrolysable group or a hydroxyl group. When the "n" in the formula (1) is 1 or 2, two or more of the X may be the same and may be different from each other. The "X" in the formula (1) has functions such that becomes a silanol group directly or due to a hydrolysis reaction with water molecules. The silanol group forms a hydrogen bond with a hydroxyl group that is present in the adhesive layer side surface of the metal aluminum film, or through a dehydration condensation reaction with the hydroxyl group, a covalent bond can be formed. In specific, when the hydroxyl group directly bonds to the organic silicon atom, the organic silicon compound includes a silanol group; thus, the silanol group can form a hydrogen bond or a covalent bond with the hydroxyl group that is present in the adhesive layer side surface of the metal aluminum film. Also, when the hydrolysable group directly bonds to the organic silicon atom, the hydrolysable group of the organic silicon compound becomes a silanol group through reaction with surrounding water molecules to cause hydrolysis, then the silanol group can form a hydrogen bond or a covalent bond with the hydroxyl group that is present in the adhesive layer side surface of the metal aluminum film.

Examples of the hydrolysable group that is the "X" may be at least one kind selected from the group consisting of an alkoxy group, an acyloxy group, an alkenoxy group, a ketoxime group, an alkoxyalkoxy group, a halogen group, an isocyanate group, a ketoxymate group, an amide group, an amideoxy group, a mercapto group, an alkenyloxy group, a phelnoxy group, and an unsubstituted or a substituted amino group.

As the alkoxy group, an alkoxy group having 1 to 4 carbon atoms is preferable and specific examples thereof may include a methyloxy group, an ethyloxy group, a propyloxy group, an isopropyloxy group, an n-butyloxy group, an isobutyloxy group, and a t-butyloxy group. The alkoxy group may include a substituted alkoxy group such as an alkoxy substituted alkoxy group.

As the acyloxy group, an acyloxy group having 1 to 6 carbon atoms is preferable, and specific examples thereof may include an acetoxy group and a benzoyloxy group.

Specific examples of the alkenoxy group may include an isopropenoxy group. Specific examples of the ketoxime group may include a methylethylketoxime group.

Specific examples of the alkoxyalkoxy group may include a methoxymethoxy group and a methoxyethoxy group.

Specific examples of the halogen group may include a fluoro group, a chloro group, a bromo group, and an iodine group.

Examples of the isocyanate group may include an isocyanate group bonded to an alkyl group, an isocyanate group bonded to a cycloalkyl group, an isocyanate group bonded to an aryl group, an isocyanate group bonded to an alkyl group substituted with a cycloalkyl group, and an isocyanate group bonded to an alkyl group substituted with an aryl group.

Among them, the hydrolysable group is preferably the alkoxy group, and particularly preferably the methyloxy group or the ethyloxy group.

Also, the "R" in the formula (1) is an organic functional group or a hydrocarbon group including an organic functional group. In other words, the "R" in the formula (1) is an organic functional group including a carbon atom that directly bonds to the organic silicon atom, or a hydrocarbon group including a carbon atom that contains an organic functional group and directly bonds to the organic silicon atom. When the "n" in the formula (1) is 2 or more, two or more of the R may be the same and may be different from each other. Examples of the organic functional group may include a vinyl group, an epoxy group, a styryl group, a (meth) acryl group, a methacryloxy group, an amino group, an ureide group, an isocyanate group, a mercapto group, a hydroxy group, a halogen group, a cyano group, and a sulfide group. Incidentally, (meth)acryl means that it is either an acryl or a methacryl. Also, when the R is the hydrocarbon group including an organic functional group, the number of carbon atoms in the hydrocarbon group is not particularly limited, but may be in a range of, for example, 1 to 30.

The organic silicon compound is not particularly limited if it is a compound represented by the formula (1) and includes the R and the X, but is preferably a silane coupling agent above all.

Specific examples of the organic silicon compound may include methyltrichlorosilane, methyltrimethoxysilane, methyltriethoxysilane, methyltributoxysilane, ethyltrimethoxysilane, ethyltriisopropoxysilane, ethyltributoxysilane, butyltrimethoxysilane, pentafluorophenyltrimethoxysilane, phenyltrimethoxysilane, nonafluorobutylethyldimethoxysilane, trifluoromethyltrimethoxysilane, dimethyldiaminosilane, dimethyldichlorosilane, dimethyldiacetoxysilane, dimethyldimethoxysilane, diphenyldimethoxysilane, dibutyldimethoxysilane, vinyltrimethoxysilane, (meth)acryloxypropyltrimethoxysilane, 3-(3-methyl-3-oxetanemethoxy)propyltrimethoxysilane, oxacyclohexyltrimethoxysilane, methyltri(meth)acryloxysilane, methyl[2-(meth)acryloxyethoxy]silane, methyl-triglycidyloxysilane, methyltris(3-methyl-3oxetanemethoxy)silane, vinyltrichlorosilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-amonopropyltrimethoxysilane, N-2-(aminoethyl)-3-aminopropyltriethoxysilane, 3-aminopropyltrimethoxysilane, 3-aminopropyltriethoxysilane, 3-triethoxysiryl-N-(1,3-dimethyl-butylidene)propylamine, and N-phenyl-3-aminopropyltrimethoxysilane.

Also, examples of the organic silicon compound may include a compound of which R in the formula (1) is ester (meth) acrylate such as methyl (meth)acrylate, ethyl (meth)acrylate, butyl (meth)acrylate, 2-ethylhexyl (meth)acrylate; acid anhydride such as carboxylic acid such as methacrylic acid, itaconic acid, and fumaric acid, and maleic anhydride; an epoxy compound such as glycidyl (meth)acrylate; an amino compound such as diethylaminoethyl (meth) acrylate, and aminoethylvinyleter; an amide compound such as amide (meth)acrylate, diamide itaconate, α-ethylacrylamide, crotonamide, diamide fumarate, diamide maleate, and N-butoxymethyl amide (meth)acrylate; and a compound of which R in the formula (1) is a vinyl-based polymer copolymerized with a vinyl-based compound selected from substances such as acrylonitrile, styrene, α-methylstyrene, vinylchloride, vinylacetate, and vinyl propionate.

In the adhesive layer, one kind of the organic silicon compounds may be included solely, and two kinds or more thereof may be included.

When the silicon-containing compound is the organic silicon compound, the content of the organic silicon compound in the adhesive layer may be in an amount so as the organic silicon atomic ratio in the adhesive layer is in the above described range, and may be appropriately determined depending on the kind of the adhesive agent component and the kind of the organic silicon compound. For example, the content of the organic silicon compound may be, as the solid content with respect to 100 parts by mass of the adhesive agent component, 0.5 parts by mass or more and 10 parts by mass or less, and above all, preferably 0.5 parts by mass or more and 5 parts by mass or less, and particularly preferably 1 part by mass or more and 4 parts by mass or less. When the content of the organic silicon compound with respect to 100 parts by mass of the adhesive agent component exceeds the above range, the condensation reaction of the organic silicon compounds may occur to easily form siloxane oligomer so that true adhesiveness of the adhesive agent may be impeded in some cases. Also, the amount of gas such as alcohol gas, which is generated by the reaction of the hydrolysable group included in the organic silicon compound with the hydroxyl group in the metal aluminum film, and the condensation reaction of the organic silicon compounds, increases; during the process of exposing the vacuum insulation material using the outer packing material of the present disclosure to an environment having high temperature and high humidity for a long period of time, the thermal insulation performance may be decreased in some cases. On the other hand, when the content of the organic silicon compound with respect to 100 parts by mass of the adhesive agent component is less than the above range, the adhesive layer would not include enough amount of the organic silicon compound to sufficiently form bonds with the hydroxyl group that is present in the adhesive layer side surface of the metal aluminum film, and the hydroxyl group remains unbonded, so that the absorption of water molecules and the property change may not be sufficiently inhibited in some cases.

When the silicon-containing compound is the organic silicon compound, in the adhesive layer, the organic silicon compound is present as a monomer represented by the formula (1), but it may also be present as a siloxane oligomer including a siloxane bond (Si-O-Si) . The siloxane oligomer is a condensate of the monomer represented by the formula (1). The siloxane oligomer includes at least the siloxane bond (Si-O-Si), and preferably includes at least one of a hydrolysable group and a hydroxyl group directly bonded to an organic silicon atom. The reason therefor is because the hydrolysable group or the hydroxyl group included in the siloxane oligomer can form a hydrogen bond or a covalent bond with the hydroxyl group in the surface of the metal aluminum film. Incidentally, too much of the proportion of the siloxane oligomer in the adhesive layer causes defects such as cloudiness of the adhesive layer and decrease in adhesive force of the adhesive layer to easily cause delamination. For this reason, the content of the siloxane oligomer is, as the solid content with respect to 100 parts by mass of the adhesive agent component, preferably 5 parts by mass or less.

On the other hand, when the silicon-containing compound is the inorganic silicon compound, examples of the inorganic silicon compound may include silicic acid, disiloxane, trisiloxane, tetramethoxysilane (TMOS), and tetraethoxysilane (TEOS). When the silicon-containing compound is the inorganic silicon compound, the content of the inorganic silicon compound in the adhesive layer may be the same as the content of the organic silicon compound in the adhesive layer when the silicon-containing compound is the organic silicon compound.

When the silicon-containing compound is the mixture of the inorganic silicon compound and the organic silicon compound, the content of the silicon compound (total of the content of the inorganic silicon compound and the content of the organic silicon compound) in the adhesive layer may be the same as the content of the organic silicon compound in the adhesive layer when the silicon-containing compound is the organic silicon compound. Also, the content of the siloxane oligomer in the adhesive layer in the above case may be the same as the content of the siloxane oligomer when the silicon-containing compound is the organic silicon compound.

### 2. Adhesive agent component

As the adhesive agent component in the adhesive layer, general adhesive agents can be used and the kind thereof is not limited. Examples of the adhesive agent may include a polyether-based adhesive agent, a polyester-based adhesive agent, a polyurethane-based adhesive agent, a vinyl-based adhesive agent, a (meth)acrylic adhesive agent, a polyamide-based adhesive agent, an epoxy-based adhesive agent, and a rubber-based adhesive agent. The adhesive agent may be one-liquid curing type, and may be two-liquid curing type. One kind of these adhesive agent components may be included solely in the adhesive layer, and two kinds or more thereof may be included.

### 3. Others

The adhesive layer may include one kind or two kinds or more of additives as required. Examples of the additive may include a vulcanizing agent (cross-linking agent), a vulcanization promoting agent, a vulcanization aid (cross-linking aid), an extender, a reinforcing agent, a processing aid, an antioxidant, a plasticizer, an ultraviolet absorbent, and a lubricant.

The thickness of the adhesive layer is not particularly limited if the size allows the silicon atomic ratio (organic silicon atomic ratio) in the adhesive layer to be in the above range and the size also allows a desired adhesive force to be achieved; for example, the thickness may be 1 um or more and 10 um or less, is preferably 2 µm or more and 5 µm or less, and further preferably 3 um or more and 5 um or less. With the thickness of the adhesive layer in the above range, sufficient adhesive force can be achieved while degassing amount derived from the adhesive layer can be further reduced.

In the adhesive layer, as described above, in an environment having high temperature and high humidity, gas such as alcohol gas is generated by the reaction of the hydrolysable group included in the silicon-containing compound with the hydroxyl group in the metal aluminum film, and the condensation reaction of the organic silicon compounds. If the amount of the gas generated from the adhesive layer is too much, during the process of exposing the vacuum insulation material using the outer packing material including the adhesive layer to an environment having high temperature and high humidity for a long period of time, the gas generated from the outer packing material would stay inside the vacuum insulation material to decrease thermal insulation performance in some cases. For this reason, the less the amount of gas generated from the adhesive layer in the environment having high temperature and high humidity, the more preferable. In specific, the amount of gas generated by heating per one adhesive layer is preferably 10 mg/m² or less, more preferably 5 mg/m² or less, and particularly preferably 3 mg/m² or less. When the amount of gas generated by heating is in the above range, during the process of exposing the insulation material using the outer packing material of the present disclosure to the environment having high temperature and high humidity for a long period of time, degrade in thermal insulation performance due to the gas generated from the outer packing material staying inside the vacuum insulation material can be inhibited.

The amount of gas generated by heating per one adhesive layer may be a value measured by a Head Space Gas Chromatography (HS-GC) method in specified measurement conditions. In specific, an adhesive sheet is prepared by forming a single layer of the adhesive layer on one surface of release paper. A sample (size of 10 cm by 10 cm) is cut out from the adhesive sheet, the release paper is peeled off from the sample to prepare a test piece, and the test piece is enclosed in a sample tube. The sample tube is heated by a head space sampler at 120°C for 60 minutes to generate gas, and the gas generated is analyzed by gas chromatography. The amount of the gas generated by heating can be determined by a calibration curve method using a peak area. Measurement conditions for the measurement by the Head Space Gas Chromatography (HS-GC) method may be the same as measurement conditions for the measurement of the amount of gas generated by heating in the outer packing material overall by the Head Space Gas Chromatography (HS-GC) method described layer; thus, the descriptions herein are omitted.

### B. Gas barrier film including metal aluminum film

The gas barrier film including a metal aluminum film in the outer packing material of the present disclosure includes at least a metal aluminum film.

### 1. Metal aluminum film

The metal aluminum film is, as described later, a thin film having a thickness of in units of a few nm to a few hundred nm, which is distinguished from a metal aluminum foil of which thickness is in units of a few um to tens of um. Also, the metal aluminum film is distinguished from an aluminum compound film, such as an aluminum oxide film and an aluminum hydroxide film, which is mainly composed of aluminum compound. Incidentally, the metal aluminum film may include impurities.

The thickness of the metal aluminum film is not particularly limited, but specifically preferably 200 nm or less, more preferably 150 nm or less, further preferably 100 nm, and particularly preferably 80 nm or less. Also, the metal aluminum film has a thickness in a level capable of achieving desired gas barrier performance. The thickness is not particularly limited, but for example, may be 10 nm or more, and above all, is preferably 20 nm or more, and particularly preferably 30 nm or more. The smaller the thickness of the metal aluminum film, the shorter the time of the progress in the property change from the film surface to inside the film, and the property change tends to occur in further shorter time in the environment having high temperature and high humidity. For this reason, when the aluminum film having smaller thickness is used, the effect of directly disposing the adhesive layer in the present disclosure described above can be more remarkably achieved.

The metal aluminum film may be a coating film by coating, and may be a vapor deposition film. The metal aluminum film may be formed by using known methods such as a coating method, a vapor deposition method, and a pressure joint method, depending on materials and kinds of the metal aluminum film.

### 2. Base material

The gas barrier film including the metal aluminum film may include just the metal aluminum film, but may also include a base material on the surface opposite to the surface contacting the adhesive layer of the metal aluminum film. In this case, the metal aluminum film is usually disposed so as to directly contact the surface of the base material. The base material is not particularly limited if it is a member that supports the metal aluminum film, and for example, a resin base material is suitably used. Specific examples of the resin base material may include a resin film of polyolefin such as polyethylene (PE) and polypropylene (PP); a resin film of polyester such as polyethylene terephthalate (PET), polyethylene naphthalate (PEN), and polybutylene terephthalate (PBT); a cyclic olefin copolymer film; a cyclic olefin polymer film; a polystyrene resin film; an acrylonitrile-styrene copolymer (AS resin) film; an acrylonitrile-butadiene-styrene copolymer (ABS resin) film; a poly (meth) acryl resin film; a polycarbonate resin film; a resin film basing polyvinyl alcohol such as polyvinyl alcohol (PVA) and an ethylene-vinyl alcohol copolymer (EVOH); a saponified ethylene-vinyl ester copolymer film; a resin film of polyamide such as various nylons; a polyimide resin film; a polyurethane resin film; an acetal resin film; a resin film of cellulose such as triacetyl cellulose (TAC); and other various resin films or sheets. Among them, a polyester resin film is preferable, and a PET film is more preferable because it has heat resistance and resilience so that the metal aluminum film is more easily formed.

The thickness of the base material may be a thickness having strength with which the metal aluminum film can be supported, and not particularly limited, but for example, may be 2 µm or more and 40 um or less.

It is preferable that the base material has flexibility. Also, the base material may or may not have light transmittance. The base material may be transparent, may be semitransparent, and may be opaque.

To the base material, a surface treatment may be conducted to a surface that contacts with the metal aluminum film, and an arbitrary layer such as a primer layer and an undercoating layer may be disposed on a surface that contacts with the metal aluminum film. The reason therefor is to increase adhesiveness to the metal aluminum film.

### 3. Others

The gas barrier film including the metal aluminum film may have a constitution configured by just the metal aluminum film. The constitution may be configured by the metal aluminum film on one surface of the base material, and may be configured by the metal aluminum films on both surfaces of the base material.

When the gas barrier film including the metal aluminum film includes the base material, an overcoating film may be included on the surface of the base material on which the metal aluminum film is not formed. The reason therefor is to improve gas barrier properties to be exhibited by the gas barrier film including the metal aluminum film. Materials for the overcoating layer are not particularly limited, and examples thereof may include a gas barrier resin composition comprising a metal oxide phosphoric acid including a M-O-P bond (here, M represents a metal atom, O represents an oxygen atom, and P represents a phosphorus atom), a zinc acrylate, a gas barrier resin compound comprising a resin and an inorganic layer shape compound; and a sol-gel polycondensate of at least one kind or more of alkoxide represented by a general formula R¹nM(OR²)m (provided that in the formula, R¹ and R² each represents an organic group having 1 to 8 carbon atoms, M represents a metal atom, n represents an integer of 0 or more, m represents an integer of 1 or more, and n + m represents the valence of M) and a water-soluble polymer.

At least one of the gas barrier film including the metal aluminum film is included in the outer packing material of the present disclosure, and two or more thereof may be included therein. The number of the gas barrier film including the metal aluminum film may be appropriately determined depending on the features such as constitution of the gas barrier film including the metal aluminum film and the gas barrier properties of the outer packing material, in the range the outer packing material of the present disclosure can have desired properties. When the outer packing material of the present disclosure comprises two or more of the gas barrier film including the metal aluminum film, at least one of the gas barrier films including the metal aluminum film includes the specified adhesive layer, described in the section "A. Adhesive layer" above, disposed directly on the metal aluminum film. Above all, in the above case, the specified adhesive layer described in the section "A. Adhesive layer" above is disposed directly on each of the gas barrier film including the metal aluminum film.

### C. Other members

The outer packing material of the present disclosure may include other members. Hereinafter, the other members in the outer packing material of the present disclosure are explained.

### 1. Thermally weldable film

The outer packing material of the present disclosure may include a thermally weldable film on one of the outermost surfaces of the outer packing material in the thickness direction. The thermally weldable film is a film that can be welded by heating thereof. The thermally weldable film is a member that works as one surface of the outer packing material in the thickness direction, and contacts with a core material when a vacuum insulation material is produced using the outer packing material of the present disclosure. It is also a member that bonds the edge of the outer packing materials facing to each other when the core material is enclosed.

As the thermally weldable film, a resin film that can be melted and fused by heating can be used, and examples thereof may include a resin film basing polyolefin such as polyethylene such as straight chain-shaped short chain branched polyethylene (LLDPE), and an unstretched polypropylene (CPP), a resin film basing polyester such as polyethylene terephthalate (PET), polyethylene naphthalate (PEN), and polybutylene terephthalate (PBT), a polyvinyl acetate-based resin film, a polyvinyl chloride-based resin film, a poly (meth) acrylic resin film, and an urethane resin film.

The thermally weldable film may include an additional material such as an anti-blocking agent, a lubricant, a flame retardant, and a filler material.

The thickness of the thermally weldable film may be in the thickness with which desired adhesiveness is obtained when the outer packing materials are bonded; for example, it is within the range of 15 µm or more and 100 µm or less, preferably within the range of 25 µm or more and 90 µm or less, and more preferably within the range of 30 µm or more and 80 µm or less.

### 2. Protective film

The outer packing material of the present disclosure may include a protective film on the other outermost surface of the outer packing material in the thickness direction. When the protective film is included, the protective film becomes a member that works as the other surface of the outer packing material in the thickness direction, and thus, becomes a layer that works as the other surface of the outer packing material in the thickness direction, so as to protect the constituting members of the outer packing material other than the protective film from damages and deterioration.

As the protective film, a generally used resin film that shows higher melting point than that of the thermally weldable film can be used. Above all, the protective film is preferably at least one kind selected from the group constituting of a nylon film, a PET film, a PBT film, and a PP film. The thickness of the protective film is not particularly limited, and can be appropriately determined.

### 3. Additional adhesive layer

The outer packing material of the present disclosure may include an additional adhesive layer which is not directly disposed on the metal aluminum film. Examples of the additional adhesive layer may include an adhesive layer that contacts the base material one of which surface the gas barrier film including the metal aluminum film is included, and an adhesive layer interposing two members other than the gas barrier film including the metal aluminum film of the outer packing material.

The additional adhesive layer may be the adhesive layer with the composition described in the section "A. Adhesive layer" above, and may be an adhesive layer with different composition from that of the adhesive layer described in the section "A. Adhesive layer" above. It means that, in the outer packing material of the present disclosure, the additional adhesive layer may further include a silicon-containing compound, or may not include a silicon-containing compound, if it includes the adhesive agent component described in the section "A. Adhesive layer" above.

### 4. Arbitrary constitution

The outer packing material of the present disclosure may include a layer capable of exhibiting gas barrier properties, other than the gas barrier film including the metal aluminum film. Examples of such a layer may include a metal foil, and a film in which a thin film formed of a metal other than the metal aluminum or an inorganic compound is included on at least one surface of a base material.

### D. Others

The thickness of the outer packing material of the present disclosure is not particularly limited, and can be appropriately determined. The thickness is preferably a size capable of including the above described properties, and it depends on the layer structure, but for example, it is 30 um or more and may be preferably 50 um or more, and also, the thickness is, for example, 200 µm or less, and may be preferably 150 um or less.

The lower the water vapor permeability of the outer packing material of the present disclosure, the more preferable; for example, it is preferably 0.1 g/ (m² ·day) or less, and above all, preferably 0.05 g/(m²·day) or less, and particularly preferably 0.01 g/(m²·day) or less. The value of the water vapor permeability signifies the initial water vapor permeability before the exposure to the environment having high temperature and high humidity.

The water vapor permeability may be measured using a water vapor permeability measurement device in the condition of at a temperature of 40°C and relative humidity difference of 90%RH in accordance with ISO 15106-5:2015 (differential pressure method) . The initial water vapor permeability measurement may be conducted in the following steps. First, a sample of the outer packing material cut out in a desired size is installed between an upper room and a lower room of the device, and the measurement is conducted to the permeation area of approximately 50 cm² (permeation region: circle having the diameter of 8 cm) in the condition of at a temperature of 40°C and relative humidity difference of 90%RH. When the outer packing material for vacuum insulation material to be measured includes the thermally weldable film, the sample is installed to the device so as the outermost surface which is opposite side to the thermally weldable film of the outer packing material for vacuum insulation material comes to high humidity side (water vapor supplying side) . As the water vapor permeability measurement device, for example, "DELTAPERM" from U.K. Technolox Ltd. may be used.

The measurement of the water vapor permeability is conducted for at least 3 pieces of the sample per one condition, and the average of these measured values is regarded as the value of water vapor permeability in that condition. Hereinafter, the water vapor permeability in the present descriptions can be measured by the same method as the method described above.

Also, the lower the oxygen permeability of the outer packing material of the present disclosure, the more preferable; for example, it is preferably 0.1 cc/(m²·day·atm) or less, and above all, more preferably 0.05 cc/(m²·day·atm) or less. The value of the oxygen permeability is regarded as the initial oxygen permeability signifies the initial oxygen permeability before the exposure to the environment having high temperature and high humidity.

The oxygen permeability may be measured using an oxygen gas permeability measurement device with reference to JIS K7126-2:2006 (Plastic - film and sheet - gas permeability test method- Section 2: Isopiestic method, Annex A: Test method of oxygen gas permeability with electrolytic sensor method) in the condition of at a temperature of 23°C and a humidity of 60%RH. As the oxygen permeability measurement device, for example, "OXTARAN" from U.S. MOCON may be used. The measurement of the oxygen permeability is conducted for at least 3 pieces of the sample per one condition, and the average of these measured values is regarded as the value of oxygen permeability in that condition.

The less the amount of gas generated in the outer packing material of the present disclosure overall, the more preferable . In specific, in the outer packing material of the present disclosure, the amount of gas generated by heating is preferably 30 mg/m² or less, more preferably 15 mg/m² or less, and particularly preferably 10 mg/m² or less. When the amount of gas generated by heating in the outer packing material is in the above range, during the process of exposing the insulation material using the outer packing material of the present disclosure to the environment having high temperature and high humidity for a long period of time, degrade in thermal insulation performance due to the gas generated from the outer packing material staying inside the vacuum insulation material, can be inhibited.

The amount of gas generated by heating of the outer packing material may be a value measured by a Head Space Gas Chromatography (HS-GC) method in below conditions. In specific, a sample (size of 10 cm by 10 cm) is cut out from the outer packing material, and the test piece is enclosed in a sample tube. The sample tube is heated by a head space sampler at 120°C for 60 minutes to generate gas, and the gas generated is analyzed by gas chromatography. The amount of the gas generated by heating can be determined by a calibration curve method using a peak area.

### <Measurement conditions>

Head Space Gas Chromatography device; HS7694model-GC6890model from Agilent Technologies Japan, Ltd.
Head Space heating condition; 120°C, 60 minutes
GC inlet temperature; 280°C
GC inlet mode; split
GC inlet split ratio; 20 : 1
Column; DB-5 equivalent product
Carrier gas; helium
Column flow rate; 2.0 ml/minute
Column temperature rising conditions; 40°C by 3 minutes (keep) → 15°C/minute (temperature up) → 320°C by 5.33 minutes (keep)
Total time; 27 minutes
Detector; Flame Ionization Detector (FID)
Detector temperature: 300°C

When the outer packing material of the present disclosure includes two or more of the gas barrier film including the metal aluminum film, the films are preferably disposed such that the first surface of the adhesive layer explained in the section "A. Adhesive layer" above directly contacts the metal aluminum film of the first gas barrier film including the metal aluminum film, the second surface of the adhesive layer opposing to the first surface directly contacts the metal aluminum film of the second gas barrier film including the metal aluminum film. With one of the adhesive layer explained in the section "A. Adhesive layer" above, two of the gas barrier films including the metal aluminum film can respectively inhibit the absorption of water molecules to each of the metal aluminum film, and the progress of the property change of each of the metal aluminum film and degrade in water vapor barrier performance can be inhibited.

The outer packing material of the present disclosure can be used for a vacuum insulation material. In the vacuum insulation material, the outer packing materials of the present disclosure is used in the manner positioned so as the thermally weldable films come to the core material side and to faces each other interposing a core material.

### II. Vacuum insulation material

The outer packing material of the present disclosure is a vacuum insulation material comprising a core material and an outer packing material enclosing the core material, and the outer packing material is the outer packing material for vacuum insulation material explained in the section "I. Outer packing material for vacuum insulation material" above.

FIG. 2A is a schematic perspective view illustrating an example of the vacuum insulation material of the present disclosure, and FIG. 2B is a cross-sectional view of X-X line in FIG. 2A. Vacuum insulation material 20 illustrated in FISG. 2A and 2B respectively comprises core material 21 and outer packing material 10 enclosing the core material 21, and the outer packing material 10 is the outer packing material for vacuum insulation material illustrated in FIG. 1. In the vacuum insulation material 20 illustrated in FIGS. 2A and 2B, a pair of the outer packing material 10 is positioned so as each of the thermally weldable film faces to each other interposing the core material 21, and the core material 21 is enclosed in the manner that the outer periphery edge part 22 of the outer packing material 10 is bonded and sealed. Internal pressure of the vacuum insulation material 20 is decompressed, which is in a state of lower pressure than the atmospheric pressure.

According to the vacuum insulation material of the present disclosure, the outer packing material enclosing the core material is the outer packing material for vacuum insulation material explained in the section "I. Outer packing material for vacuum insulation material" above, and thus degrade in water vapor barrier properties of the outer packing material is inhibited even when the vacuum insulation material is used under the environment having high temperature and high humidity, and the low vacuum state inside can be maintained for a long period of time. Thereby, the vacuum insulation material of the present disclosure can achieve excellent thermal insulation performance for a long period of time in the environment having high temperature and high humidity.

Hereinafter, each constitution of the vacuum insulation material of the present disclosure is explained.

### A. Outer packing material

The outer packing material in the vacuum insulation material of the present disclosure is a member that encloses a core material, and is the same as the outer packing material for vacuum insulation material explained in the section "I. Outer packing material for vacuum insulation material described above; thus, the explanation herein is omitted.

### B. Core material

The core material in the vacuum insulation material of the present disclosure is a member that is enclosed in the outer packing material. Incidentally, enclosed (enclosing) means sealed (sealing) inside the bag body formed of the outer packing materials.

The core material may be a material of which heat conductivity is low, and examples thereof may include a particulate, a foam resin, and a fiber. The core material may be formed of one material among the above described materials, and may be a composite material formed by mixing two or more of the materials. Also, the core material may be formed of an inorganic material or an organic material, and may be a mixture of the one formed of an organic material and the one formed of an inorganic material.

### C. Vacuum insulation material

In the vacuum insulation material of the present disclosure, the core material is enclosed inside a bag body of the outer packing material, and the inside sealed is decompressed to a vacuum state. The vacuum degree inside the vacuum insulation material of the present disclosure is, for example, preferably 5 Pa or less. Thereby, the heat conduction due to the convection of air remained inside does not easily occur, and thus excellent thermal insulation performance can be achieved.

The lower the heat conductivity of the vacuum insulation material of the present disclosure, the more preferable. The heat conductivity is, for example, preferably 5 mW/ (m·K) or less. The reason therefor is that the heat would not be easily conducted to outside, and thus high heat insulation effect can be achieved. Above all, the heat conductivity is more preferably 4 mW/ (m·K) or less, and further preferably 3 mW/(m-K) or less. The heat conductivity may be a value measured in accordance with JIS A1412-2:1999 in the conditions of high temperature side at 30°C, low temperature side at 10°C, and average temperature at 20°C.

### D. Others

As the method for producing the vacuum insulation material of the present disclosure, a known method may be used. For example, two pieces of the outer packing material for vacuum insulation material explained in the section "I. Outer packing material for vacuum insulation material" above are prepared and overlapped so that each thermally weldable film faces to each other, and three sides of the outer periphery are thermally welded (heat-sealed) to obtain a bag body of which one side opens . After inserting a core material to the bag body from the opening, the air is sucked from the opening and the opening is sealed when inside the bag body is in a decompressed state; thereby, the vacuum insulation material may be obtained.

### III. Article provided with vacuum insulation material

The article provided with vacuum insulation material of the present disclosure is an article provided with vacuum insulation material comprising an article including a thermal insulation region, and a vacuum insulation material, wherein the vacuum insulation material comprises a core material, and an outer packing material enclosing the core material, and the outer packing material is the outer packing material for vacuum insulation material explained in the section "I. Outer packing material for vacuum insulation material" above.

According to the article provided with vacuum insulation material of the present disclosure, the outer packing material constituting the vacuum insulation material provided in the article is the outer packing material for vacuum insulation material explained in the section "I. Outer packing material for vacuum insulation material" above, and thus excellent thermal insulation performance can be achieved for a long period of time even when it is used under the environment having high temperature and high humidity for a long period of time. The article is provided with such a vacuum insulation material, and thus energy conservation of the article to be in the environment having high temperature and high humidity and of a target material wherein the article is used may be achieved.

The vacuum insulation material, and the outer packing material used therefor in the present disclosure are explained in details in the section "II. Vacuum insulation material" and "I. Outer packing material for vacuum insulation material" above; thus, the explanations herein are omitted.

The article in the present disclosure includes a thermal insulation region. Here, the thermal insulation region is a region thermally insulated by the vacuum insulation material, which is, for example, a region warmed or cooled, a region surrounding a heating source and a cooling source, and a region isolated from the heating source and the cooling source. These regions may be space and may be substance. Examples of the article may include electronic devices such as a refrigerator, a freezer, a heat-keeping device, and a cool-keeping device, containers such as a heat-keeping container, a cool-keeping container, a container for transportation, a container, and a storing container, conveyance for transporting such as a vehicle, an airplane, and a vessel, buildings such as a house and a storehouse, and construction materials such as a wall material and a floor material.

### Examples

The present disclosure is hereinafter explained in further details with reference to Reference Examples and Reference Comparative Examples, as well as Examples and Comparative Example below.

### [Reference Examples 1 to 8 and Reference Comparative Examples 1 to 3]

### <Preparation of adhesive agent component>

Adhesive agent components AA1 to AA5, BA1 to BA4, and BB1 to BB2 were prepared using materials described below and blends shown in Table 1.

### <Adhesive agent>

- Adhesive agent A: a two-liquid curing type adhesive agent in which amain agent mainly composed of polyester polyol (product name: RU-77T, from ROCK PAINT CO. , LTD), a curing agent including aliphatic polyisocyanate (product name: H-7 from ROCK PAINT CO. , LTD), and a solution of ethyl acetate were mixed in the weight blending ratio of the main agent : the curing agent : the solution = 10 : 1 : 14.
- Adhesive agent B: a two-liquid curing type adhesive agent in which a main agent mainly composed of polyester-based resin and including a methoxysinane component (Product name: TM-556-S from Toyo-Morton, Ltd.), a curing agent including a polyisocyanate-based resin (Product name: CAT-56 from Toyo-Morton, Ltd.), and a solution of ethyl acetate were mixed so as to be the main agent : the curing agent : the solvent = 17 : 3 : 30 in the weight blending ratio.

### <Silane coupling (SC) agent>

- Silane coupling agent A (SC agent A): 3-glycidoxypropyltrimethoxysilane (KBM-403 from Shin-Etsu Chemical Co., Ltd.)
- Silane coupling agent B (SC agent B): vinyltrimethoxysilane (KBM-1003 from Shin-Etsu Chemical Co., Ltd.)

**[Table 1]**

| | Adhesive agent composition | Adhesive agent | SC agent | |
|---|---|---|---|---|
| | | | | wt% |
| Reference Comparative Example 1 | AA1 | Adhesive agent A | SC agent A | 0 |
| Reference Example 1 | AA2 | | | 3 |
| Reference Example 2 | AA3 | | | 5 |
| Reference Example 3 | AA4 | | | 10 |
| Reference Comparative Example 2 | AA5 | | | 30 |
| Reference Example 4 | BA1 | Adhesive | SC agent A | 0 |
| Reference Example 5 | BA2 | agent B | | 1 |
| Reference Example 6 | BA3 | | | 5 |
| Reference Comparative Example 3 | BA4 | | | 30 |
| Reference Example 7 | BB1 | | SC agent B | 0 |
| Reference Example 8 | BB2 | | | 1 |

An adhesive layer was formed by coating the aluminum vapor deposition film surface of the gas barrier film A (product name: TAF1590, base material: PET film, from Toray Advanced Film Co., Ltd., hereinafter referred to as simply film A in some cases) including the aluminum vapor deposition film (thickness: 70 nm) on one surface, with one of the adhesive agent component prepared and obtained in advanced so that the coating amount became 3.5 g/m². A polyethylene terephthalate (PET) base material was disposed on the opposite side surface to the surface that contacted the aluminum vapor deposition film of the adhesive layer, aged at 40°C for 3 days, and thereby each of a sample was obtained (Reference Examples 1 to 8 and Reference Comparative Examples 1 to 3).

### [Evaluation]

Evaluations 1 to 4 as below were conducted for the samples obtained in Reference Examples 1 to 8 and Reference Comparative Examples 1 to 3.

### <Evaluation 1: Organic silicon atomic ratio in adhesive layer>

Regarding each of the samples obtained in Reference Examples 1 to 8 and Reference Comparative Examples 1 to 3, a composition analysis on the surface of the adhesive layer was conducted by an X-ray photoelectron spectroscopy (XPS), and thereby the organic silicon atomic ratio in the adhesive layer was respectively obtained. First, each of the samples was peeled from between the adhesive layer and the metal aluminum film to expose the adhesive layer, an X-ray was irradiated from the exposed surface of the adhesive layer to the depth direction using an X-ray photoelectron spectroscopy meter (Theta-Probe from Thermo Fisher Scientific), and C, O, N, and organic Si were determined as the analysis target elements to measure the X-ray photoelectron spectrum. From the obtained spectrum, a background determined by Shirley method was subtracted, and thereby the atomic ratio (at%) of the organic silicon atom when the whole number of carbon atoms, oxygen atoms, nitrogen atoms, and organic silicon atoms in the adhesive layer were regarded as 100 at%, was obtained from the peak area using a relative sensitivity coefficient method. Incidentally, in C1s spectrum, electrification correction was conducted so that the peak belonging to a C-C bond was in a range of 284.6 eV to 285.0 eV. Also, regarding Si2p peak, a peak that appeared in a range of 101.5 eV to 102.5 eV in the spectrum was regarded as the peak derived from the organic Si element, and a peak that appeared in a range of 103.0 eV to 103.8 eV was regarded as the peak derived from the inorganic Si element.

### <Measurement conditions>

Incident X-ray; Monochromated Al-Kα ray (single colored x-ray, Hv = 1486.6 eV
X-ray irradiation region (measurement area); 400 µmφ
X-ray output; 100 W (15 kV·6.7 mA)
Photoelectron take-in angle; 53° (sample normal line was regarded as 0°)
Electrification neutralizing conditions; electron neutralizing gun (+ 6 V, 0.05 mA), low acceleration Ar⁺ ion irradiation
Measured peaks; Al2p, Si2p, C1s, N1s, O1s, F1s

Incidentally, in the composition analysis on the surface of the adhesive layer in each of the samples obtained in Reference Examples 1 to 8 and Reference Comparative Examples 1 to 3, the spectrum of inorganic Si was not detected. Thus, the silicon atomic ratio in the adhesive layer was the same as the organic silicon atomic ratio.

### <Evaluation 2: delamination occurrence evaluation>

Regarding each of the samples obtained in Reference Examples 1 to 8 and Reference Comparative Examples 1 to 3, appearance was respectively confirmed from the PET base material side disposed on the surface opposite side to the surface that contacts the metal aluminum film of the adhesive layer, and thereby presence or absence of the occurrence of delamination was confirmed. The case the delamination was not confirmed between the metal aluminum film and the PET base material was marked as "○", and the case one or more of the delamination was confirmed between the metal aluminum film and the PET base material was marked as "X".

### <Evaluation 3: Initial water vapor permeability and one after being kept in high temperature and high humidity>

Regarding each of the samples obtained in Reference Examples 1 to 6 and Reference Comparative Examples 1 to 3, the initial water vapor permeability was measured. The water vapor permeability was measured using a water vapor permeability measurement device (PERMATRAN fromU.S. MOCON) in the conditions of at a temperature of 40°C and relative humidity difference of 90%RH in accordance with JIS K 7129:2008 (Annex B: Infrared sensor method; the same hereinafter). First, a test piece in a desired size was respectively cut out from each of the sample and installed between an upper room and a lower room of the device so as the surface of the metal aluminum film of the test piece came to high humidity side (water vapor supplying side), and the measurement was conducted to the permeation area of approximately 50 cm² (permeation region: circle having the diameter of 8 cm) in the condition of at a temperature of 40°C and relative humidity difference of 90%RH. The measurement of the water vapor permeability for each of the samples was conducted for at least 3 pieces of the test piece, and the average of these measured values was regarded as the value of water vapor permeability for that sample.

Next, each of the samples obtained in Reference Examples 1 to 6 and Reference Comparative Example 1 was kept in an environment having a temperature of 85°C and relative humidity of 85%RH for 28 days, and then the water vapor permeability after being kept in high temperature and high humidity was measured in the same manner as in the measurement method for the initial water vapor permeability described above.

### <Evaluation 4: Initial OD value and one after being kept in high temperature and high humidity>

Regarding each of the samples obtained in Reference Examples 1 to 8 and Reference Comparative Examples 1 to 3, the initial OD value was measured using a transmission densitometer (portable transmission densitometer 341 from X-Rite Inc.).

Next, each of the samples obtained in Reference Examples 1 to 8 and Reference Comparative Examples 1 to 3 was kept in an environment having a temperature of 85°C and relative humidity of 85%RH for 28 days, and then the OD value after being kept in high temperature and high humidity was measured in the same manner as in the measurement method for the initial OD value described above.

The results of Evaluations 1 to 4 are shown in Table 2.

**[Table 2]**

| | Adhesive layer | Evaluation 1 | Evaluation 2 | Evaluation 3 | | Evaluation 4 | |
|---|---|---|---|---|---|---|---|
| | Adhesive agent composition | Organic Si/ (C+O+N+Organic Si) | Delamination | Initial | 85°C85%RH 28days | Initial | 85°C85%RH 28days |
| | | At% | ○ or × | g/(m² · day) | g/(m² · day) | no unit | |
| Reference Comparative Example 1 | AA1 | 1.0 | ○ | 0.6 | 18.1 | 3.0 | 0.4 |
| Reference Example 1 | AA2 | 2.8 | ○ | 0.7 | 9.0 | 3.0 | 2.3 |
| Reference Example 2 | AA3 | 5.8 | ○ | 0.7 | 7.4 | 3.0 | 2.5 |
| Reference Example 3 | AA4 | 6.3 | ○ | 0.7 | 6.7 | 2.9 | 2.5 |
| Reference Comparative Example 2 | AA5 | 7.1 | × | 0.7 | - | 2.9 | 2.1 |
| Reference Example 4 | BA1 | 1.5 | ○ | 0.7 | 4.8 | 3.0 | 2.3 |
| Reference Example 5 | BA2 | 3.7 | ○ | 0.6 | 4.2 | 3.0 | 2.9 |
| Reference Example 6 | BA3 | 4.9 | ○ | 0.7 | 3.6 | 2.8 | 2.8 |
| Reference Comparative Example 3 | BA4 | 7.4 | × | 0.7 | - | 2.9 | 2.5 |
| Reference Example 7 | BB1 | 1.5 | ○ | - | - | 3.0 | 2.3 |
| Reference Example 8 | BB2 | 5.4 | ○ | - | - | 3.0 | 2.8 |

### [Consideration 1]

From Table 2, there was no huge difference in the initial water vapor permeability for Reference Examples 1 to 6 and Reference Comparative Example 1. However, the water vapor permeability after being kept in high temperature and high humidity for a long period of time of Reference Comparative Example 1 rose largely compared to Reference Examples 1 to 6. From this, it was suggested that degrade in water vapor permeability was inhibited even after being kept in an environment having high temperature and high humidity for a long period of time when the organic silicon atomic ratio in the adhesive layer was higher. On the other hand, the organic silicon atomic ratio in the adhesive layer of Reference Comparative Examples 2 to 3 was respectively over 7.0 at%, and the occurrence of the delamination was confirmed in the process of being kept in an environment having high temperature and high humidity. In addition, the state of cloudiness in the adhesive layer was observed in Reference Comparative Examples 2 to 3.

There was no huge difference in the initial OD value for Reference Examples 1 to 8 and Reference Comparative Examples 1 to 3. However, regarding Reference Comparative Example 1, since the organic silicon atomic ratio in the adhesive layer thereof was not in the specified range, the OD value after being kept in an environment having high temperature and high humidity for a long period of time dropped sharply compared to those of Reference Examples 1 to 8. This is presumably because a number of the hydroxyl group that could not form bonds with the organic silicon compound in the adhesive layer remained on the surface of the metal aluminum film, and the hydroxyl group absorbed a large quantity of water molecules to proceed the property change to inside the film, and thus it was transformed to a transparent aluminum compound film.

### [Examples 1 to 2 and Comparative Example 1]

### <Production of outer packing material for vacuum insulation material>

A film including a metal oxide phosphoric acid layer (hereinafter referred to as simply a film B in some cases), a gas barrier film including a metal aluminum film (hereinafter referred to as simply a film C in some cases), and a thermally weldable film described as follows were prepared:
- Film including a metal oxide phosphoric acid layer (Film B) :
   a PET film (KURARISTER^{™} CF fromKURARAY CO., LTD., 12 µm thick) on one of which surface a metal oxide phosphoric acid layer including Al-O-P bond was formed;
- Gas barrier film including a metal aluminum film (Film C) :
   an EVOH film (TMXL from KURARAY CO., LTD., 12 um thick) on one of which surface a metal aluminum (Al) film is deposited;
- Thermally weldable film: a straight chain-shaped (linear) low density polyethylene (LLDPE) film (TUS-HC-E from Mitsui Chemicals Tohcello Inc., 50 um thick).

The film A used in Reference Examples 1 to 6 and Reference Comparative Example 1, the film B, the film C, and the thermally weldable film described above were used to obtain an outer packing material for vacuum insulation material having the layering order of the film B// the film A// the film C// the thermally weldable film. Incidentally, "//" in the layering order signifies the layer interface interposing an adhesive layer. In addition, in the outer packing material for vacuum insulation material, the film B is a layer capable of exhibiting gas barrier properties. The adhesive layer was formed by coating the surface of one layer among two adjacent layers interposing the adhesive layer with one of the adhesive agent components AA1 to AA3 prepared and obtained in advanced, so that the coating amount became 3.5 g/m². Also, regarding each of the films A to C, the film A was disposed so as the metal aluminum film faced to the film B side, the film B was disposed so that the metal oxide phosphoric acid layer side surface faced to the film C side, and the film C was disposed so that the metal aluminum film side surface faces to the film B side.

### <Production of vacuum insulation material>

Two pieces of the single piece (size: 360 mm by 450 mm) cut out from the outer packing material for vacuum insulation material obtained were prepared and overlapped so that each of the thermally weldable film faces to each other, and the three sides of tetragon were heat-sealed to form a bag body of which just one side was open. Glass wool (size: 290 mm by 300 mm by 30 mm) was used as a core material, and a drying treatment was carried out thereto, and after that, the core material and 5 g of calcium oxide as a drying agent were stored in the bag body, and the air inside the bag body was ejected. After that, the opening part of the bag body was sealed by heat-sealing to obtain a vacuum heat insulation material. The ultimate pressure was 0.05 Pa.

### [Evaluation]

Evaluation 5 to Evaluation 6 below were respectively conducted for the outer packing materials for vacuum insulation material and vacuum insulation materials obtained in Examples 1 to 2 and Comparative Example 1.

### <Evaluation 5: Amount of gas generated by heating>

The amount of gas generated by heating the outer packing materials for vacuum insulation material obtained in Examples 1 to 2 and Comparative Example 1 was respectively measured by a Head Space Gas Chromatography (HS-GC) method. First, a test piece (size of 10 cm by 10 cm) was cut out from each of the outer packing materials for vacuum insulation material, and the test piece was respectively enclosed in a sample tube. The sample tube was heated by a head space sampler at 120°C for 60 minutes to generate gas, and the gas generated thereby was used for the gas chromatography. The amount of gas generated by heating was determined by a calibration curve method using a peak area. The measurement conditions were as follows.

### <Measurement conditions>

HS-GC device; HS7694model-GC6890model from Agilent Technologies Japan, Ltd.
Head Space heating condition; 120°C, 60 minutes
GC inlet temperature; 280°C
GC inlet mode; split
GC inlet split ratio; 20 : 1
Column; DB-5 equivalent product
Carrier gas; helium
Column flow rate; 2.0 ml/minute
Column temperature rising conditions; 40°C by 3 minutes (keep) → 15°C/minute (temperature up) → 320°C by 5.33 minutes (keep)
Total time; 27 minutes
Detector; Flame Ionization Detector (FID)
Detector temperature: 300°C

### <Evaluation 6: Heat conductivity>

Regarding the vacuum insulation materials obtained in Examples 1 to 2 and Comparative Example 1, the initial heat conductivity (A) (before being kept in an atmosphere having a temperature of 70°C and a humidity of 90%RH), the heat conductivity (B) after being kept in an atmosphere having a temperature of 70°C and a humidity of 90%RH for 15 days, and the heat conductivity (C) after being kept in an atmosphere having a temperature of 70°C and a humidity of 90%RH for 50 days, were respectively measured. The heat conductivity was measured using a thermal conductivity measurement device (product name: Auto A HC-074, from EIKO Instruments) in accordance with JIS A1412-2: 1999 (Measurement method of heat resistance and heat conductivity of heat insulation material- Section 2: Heat flow meter method (HFMmethod)) in below conditions . The measurement of the heat conductivity was conducted for at least 3 pieces of the sample per each vacuum insulation material, and the average of these measured values was regarded as the value of heat conductivity for that vacuum insulation material.

### <Measurement conditions>

- Size: width of 29 cm ± 0.5 cm, length of 30 cm ± 0.5 cm
- Time required for steady test: 15 minutes or more
- Kind of standard plate: EPS
- Temperature of high temperature surface: 30°C
- Temperature of low temperature surface: 10°C
- Average temperature of measurement sample: 20°C

Results of Evaluations 5 to 6 are shown in Table 3.

**[Table 3]**

| | Adhesive layer | | Evaluation 5 | Evaluaion 6 | | |
|---|---|---|---|---|---|---|
| | Adhesive agent composition | Organic Si/ (C+O+N+Organic Si) | Amount of gas generated by heating | Initial | 70°C90%RH 15days | 70°C90%RH 50days |
| | | At% | mg/m2 | mW/m · K | mW/m · K | mW/m · K |
| Comparative Example 1 | AA1 | 1.0 | 4.5 | 3.0 | 6.2 | 22.2 |
| Example 1 | AA2 | 2.8 | 8.4 | 3.0 | 5.7 | 13.5 |
| Example 2 | AA3 | 5.8 | 54.7 | 3.1 | 10.1 | 23.8 |

### [Consideration 2]

From Table 3, it was confirmed that the time took until the heat conductivity decreased from when the outer packing material was placed in the environment having a temperature of 70°C and a humidity of 90%RH was shorter in Example 2, compared to Example 1. This is presumably because the organic silicon atomic ratio in the adhesive layer of the outer packing material for vacuum insulation material in Example 2 was over 5.0 at%, and thus the amount of gas generated by heating the adhesive layer increased.

### Reference Signs List

- 1: metal aluminum film
- 2: base material
- 10: outer packing material for vacuum insulation material
- 11: gas barrier film including metal aluminum film
- 12: adhesive layer
- 13: thermally weldable film
- 20: vacuum insulation material
- 21: core material

## Claims

1. An outer packing material for vacuum insulation material comprising a gas barrier film including a metal aluminum film, and an adhesive layer disposed directly on the metal aluminum film; wherein
the adhesive layer includes an adhesive agent component and a silicon-containing compound in which at least one of a hydrolysable group and a hydroxyl group directly bonds to a silicon atom; and
the atomic ratio of the silicon atom in the adhesive layer is 1.5 at% or more and 7.0 at% or less.

2. The outer packing material for vacuum insulation material according to claim 1, wherein
the silicon-containing compound is an organic silicon compound in which at least one of the hydrolysable group and the hydroxyl group directly bonds to an organic silicon atom; and
the atomic ratio of the organic silicon atom in the adhesive layer is 1.5 at% or more and 7.0 at% or less.

3. The outer packing material for vacuum insulation material according to claim 2, wherein the atomic ratio of the organic silicon atom is 1.5 at% or more and 5.0 at% or less.

4. A vacuum insulation material comprising a core material, and an outer packing material enclosing the core material; wherein,
the outer packing material comprises a gas barrier film including a metal aluminum film, and an adhesive layer directly disposed on the metal aluminum film;
the adhesive layer includes an adhesive agent component, and a silicon-containing compound in which at least one of a hydrolysable group and a hydroxyl group directly bonds to a silicon atom; and
the atomic ratio of the silicon atom in the adhesive layer is 1.5 at% or more and 7.0 at% or less.

5. The vacuum insulation material according to claim 4, wherein
the silicon-containing compound is an organic silicon compound in which at least one of the hydrolysable group and the hydroxyl group directly bonds to an organic silicon atom; and
the atomic ratio of the organic silicon atom in the adhesive layer is 1.5 at% or more and 7.0 at% or less.

6. The vacuum insulation material according to claim 5, wherein the atomic ratio of the organic silicon atom is 1.5 at% or more and 5.0 at% or less.

7. An article with vacuum insulation material comprising an article including a thermal insulation region, and a vacuum insulation material; wherein,
the vacuum insulation material comprises a core material, and an outer packing material enclosing the core material;
the outer packing material comprises a gas barrier film including a metal aluminum film, and an adhesive layer directly disposed on the metal aluminum film;
the adhesive layer includes an adhesive agent component, and a silicon-containing compound in which at least one of a hydrolysable group and a hydroxyl group directly bonds to a silicon atom; and
the atomic ratio of the silicon atom in the adhesive layer is 1.5 at% or more and 7.0 at% or less.

8. The article with vacuum insulation material according to claim 7, wherein
the silicon-containing compound is an organic silicon compound in which at least one of the hydrolysable group and the hydroxyl group directly bonds to an organic silicon atom; and,
the atomic ratio of the organic silicon atom in the adhesive layer is 1.5 at% or more and 7.0 at% or less.

9. The article with vacuum insulation material according to claim 8, wherein the atomic ratio of the organic silicon atom is 1.5 at% or more and 5.0 at% or less.

## Patentansprüche

1. Außenverpackungsmaterial für Vakuumdämmstoff, umfassend eine Gassperrfolie, die eine Metall-Aluminium-Folie beinhaltet, und eine direkt auf der Metall-Aluminium-Folie angeordnete Klebeschicht; wobei
die Klebeschicht eine Klebstoffkomponente und eine siliziumhaltige Verbindung beinhaltet, in der mindestens eine von einer hydrolysierbare Gruppe oder einer Hydroxylgruppe direkt an ein Siliziumatom gebunden ist; und
das Atomverhältnis des Siliziumatoms in der Klebeschicht 1,5 At-% oder mehr und 7,0 At-% oder weniger beträgt.

2. Außenverpackungsmaterial für Vakuumdämmstoff nach Anspruch 1, wobei
die siliziumhaltige Verbindung eine organische Siliziumverbindung ist, in der mindestens eine von der hydrolysierbaren Gruppe und der Hydroxylgruppe direkt an ein organisches Siliziumatom gebunden ist; und
das Atomverhältnis des organischen Siliziumatoms in der Klebeschicht 1,5 At-% oder mehr und 7,0 At-% oder weniger beträgt.

3. Außenverpackungsmaterial für Vakuumdämmstoff nach Anspruch 2, wobei das Atomverhältnis des organischen Siliziumatoms 1,5 At-% oder mehr und 5,0 At-% oder weniger beträgt.

4. Vakuumdämmstoff, umfassend ein Kernmaterial und ein Außenverpackungsmaterial, welches das Kernmaterial umschließt; wobei
das Außenverpackungsmaterial eine Gassperrfolie, die eine Metall-Aluminium-Folie beinhaltet, und eine Klebeschicht, die direkt auf der Metall-Aluminium-Folie angeordnet ist, umfasst;
die Klebeschicht eine Klebstoffkomponente und eine siliziumhaltige Verbindung beinhaltet, in der mindestens eine von einer hydrolysierbaren Gruppe oder einer Hydroxylgruppe direkt an ein Siliziumatom gebunden ist; und
das Atomverhältnis des Siliziumatoms in der Klebeschicht 1,5 At-% oder mehr und 7,0 At-% oder weniger beträgt.

5. Vakuumdämmstoff nach Anspruch 4, wobei
die siliziumhaltige Verbindung eine organische Siliziumverbindung ist, in der mindestens eine von der hydrolysierbaren Gruppe und der Hydroxylgruppe direkt an ein organisches Siliziumatom gebunden ist; und
das Atomverhältnis des organischen Siliziumatoms in der Klebeschicht 1,5 At-% oder mehr und 7,0 At-% oder weniger beträgt.

6. Vakuumdämmstoff nach Anspruch 5, wobei das Atomverhältnis des organischen Siliziumatoms 1,5 At-% oder mehr und 5,0 At-% oder weniger beträgt.

7. Gegenstand mit Vakuumdämmstoff, umfassend einen Gegenstand, der einen Wärmedämmbereich und einen Vakuumdämmstoff beinhaltet; wobei
der Vakuumdämmstoff ein Kernmaterial und ein Außenverpackungsmaterial umfasst, welches das Kernmaterial umschließt;
das Außenverpackungsmaterial eine Gassperrfolie, die eine Metall-Aluminium-Folie beinhaltet, und eine Klebeschicht, die direkt auf der Metall-Aluminium-Folie angeordnet ist, umfasst;
die Klebeschicht eine Klebstoffkomponente und eine siliziumhaltige Verbindung beinhaltet, in der mindestens eine von einer hydrolysierbaren Gruppe oder einer Hydroxylgruppe direkt an ein Siliziumatom gebunden ist; und
das Atomverhältnis des Siliziumatoms in der Klebeschicht 1,5 At-% oder mehr und 7,0 At-% oder weniger beträgt.

8. Gegenstand mit Vakuumdämmstoff nach Anspruch 7, wobei
die siliziumhaltige Verbindung eine organische Siliziumverbindung ist, in der mindestens eine von der hydrolysierbaren Gruppe und der Hydroxylgruppe direkt an ein organisches Siliziumatom gebunden ist; und
das Atomverhältnis des organischen Siliziumatoms in der Klebeschicht 1,5 At-% oder mehr und 7,0 At-% oder weniger beträgt.

9. Gegenstand mit Vakuumdämmstoff nach Anspruch 8, wobei das Atomverhältnis des organischen Siliziumatoms 1,5 At-% oder mehr und 5,0 At-% oder weniger beträgt.

## Revendications

1. Matériau de conditionnement externe pour matériau d'isolation sous vide comprenant un film barrière aux gaz comprenant un film d'aluminium métallique, et une couche adhésive agencée directement sur le film d'aluminium métallique ; dans lequel
la couche adhésive comprend un composant agent adhésif et un composé contenant du silicium dans lequel au moins l'un parmi un groupe hydrolysable et un groupe hydroxyle se lie directement à un atome de silicium ; et
le rapport atomique de l'atome de silicium dans la couche adhésive est supérieur ou égal à 1,5 % atomique et inférieur ou égal à 7,0 % atomique.

2. Matériau de conditionnement externe pour matériau d'isolation sous vide selon la revendication 1, dans lequel
le composé contenant du silicium est un composé organique de silicium dans lequel au moins l'un parmi le groupe hydrolysable et le groupe hydroxyle se lie directement à un atome de silicium organique ; et
le rapport atomique de l'atome de silicium organique dans la couche adhésive est supérieur ou égal à 1,5 % atomique et inférieur ou égal à 7,0 % atomique.

3. Matériau de conditionnement externe pour matériau d'isolation sous vide selon la revendication 2, dans lequel le rapport atomique de l'atome de silicium organique est supérieur ou égal à 1,5 % atomique et inférieur ou égal à 5,0 % atomique.

4. Matériau d'isolation sous vide comprenant un matériau d'âme et un matériau de conditionnement externe entourant le matériau d'âme ; dans lequel,
le matériau de conditionnement externe comprend un film barrière aux gaz comprenant un film d'aluminium métallique, et une couche adhésive agencée directement sur le film d'aluminium métallique ;
la couche adhésive comprend un composant agent adhésif, et un composé contenant du silicium dans lequel au moins l'un parmi un groupe hydrolysable et un groupe hydroxyle se lie directement à un atome de silicium ; et
le rapport atomique de l'atome de silicium dans la couche adhésive est supérieur ou égal à 1,5 % atomique et inférieur ou égal à 7,0 % atomique.

5. Matériau d'isolation sous vide selon la revendication 4, dans lequel
le composé contenant du silicium est un composé organique de silicium dans lequel au moins l'un parmi le groupe hydrolysable et le groupe hydroxyle se lie directement à un atome de silicium organique ; et
le rapport atomique de l'atome de silicium organique dans la couche adhésive est supérieur ou égal à 1,5 % atomique et inférieur ou égal à 7,0 % atomique.

6. Matériau d'isolation sous vide selon la revendication 5, dans lequel le rapport atomique de l'atome de silicium organique est supérieur ou égal à 1,5 % atomique et inférieur ou égal à 5,0 % atomique.

7. Article avec matériau d'isolation sous vide comprenant un article comprenant une région d'isolation thermique, et un matériau d'isolation sous vide ; dans lequel,
le matériau d'isolation sous vide comprend un matériau d'âme, et un matériau de conditionnement externe entourant le matériau d'âme ;
le matériau de conditionnement externe comprend un film barrière aux gaz comprenant un film d'aluminium métallique, et une couche adhésive agencée directement sur le film d'aluminium métallique ;
la couche adhésive comprend un composant agent adhésif, et un composé contenant du silicium dans lequel au moins l'un parmi un groupe hydrolysable et un groupe hydroxyle se lie directement à un atome de silicium ; et
le rapport atomique de l'atome de silicium dans la couche adhésive est supérieur ou égal à 1,5 % atomique et inférieur ou égal à 7,0 % atomique.

8. Article avec matériau d'isolation sous vide selon la revendication 7, dans lequel
le composé contenant du silicium est un composé organique de silicium dans lequel au moins l'un parmi le groupe hydrolysable et le groupe hydroxyle se lie directement à un atome de silicium organique ; et,
le rapport atomique de l'atome de silicium organique dans la couche adhésive est supérieur ou égal à 1,5 % atomique et inférieur ou égal à 7,0 % atomique.

9. Article avec matériau d'isolation sous vide selon la revendication 8, dans lequel le rapport atomique de l'atome de silicium organique est supérieur ou égal à 1,5 % atomique et inférieur ou égal à 5,0 % atomique.
